# EUROPEAN PATENT APPLICATION

(11) **EP 2 421 001 A2**
(43) Date of publication of application: **22.02.2012**
(21) Application number: 10764654.9
(22) Date of filing: 14.04.2010
(51) Int. Cl.: G11B 7/007, G11B 7/004, G11B 20/12, G11B 20/10

(54) **INFORMATION STORAGE MEDIUM, RECORDING / PLAYBACK APPARATUS, AND RECORDING / PLAYBACK METHOD**

(30) Priority: 14.04.2009 US 169004 P; 14.04.2010 KR 20100034393
(71) Applicant: Samsung Electronics Co., Ltd., Suwon-si, Gyeonggi-do 442-742 (KR)
(72) Inventor: HWANG, Sung-Hee, Suwon-si Gyeonggi-do 443-738 (KR); LEE, Kyung-Geun, Seongnam-si Gyeonggi-do 463-773 (KR); HWANG, In-Oh, Seongnam-si Gyeonggi-do 463-781 (KR)
(74) Representative: Robinson, Ian Michael
(86) International application number: PCT/KR2010/002309
(87) International publication number: WO 2010/120115

(57) **Abstract**

An information storage medium is provided. The information storage medium includes a user data area on which user data is recorded, and a temporary disc management area on which a space bitmap representing a recording status of at least one recording/reproducing unit block of the user data area is recorded. The space bitmap including information about an additional space bitmap which is assigned in response to a space of the space bitmap being insufficient to represent the recording status of the at least one recording/reproducing unit block of the user data area.

## Description

### TECHNICAL FIELD

The following description relates to an information storage medium, a recording and reproducing apparatus, and a recording and reproducing method.

### BACKGROUND ART

In order to increase capacity of an information storage medium or to increase an amount of information transmitted through a wired or wireless network, various methods using high density and multi-layer structures are being developed to achieve a higher capacity. Generally, high capacity is achieved by combining a high density per layer and a multi-layer structure. Accordingly, due to an increase in an amount of disc management information generated for at least one high density layer of a multi-layer structure, a method to effectively manage the increased amount of disc management information is beneficial.

For example, a physical standard of a current blu-ray disc includes a single layer or a dual layer per disc, where recording density per layer corresponds with 25 GB. In response to a blu-ray disc having a triple layer or a quadruple layer, where recording density per layer is increased to 30 to 40 GB, being used for discs having a higher capacity than the current blu-ray disc, an amount of disc management information for managing the blu-ray disc increases due to the increase in capacity per layer. In response to a recording status of a recording/reproducing unit block of a user data area being represented in a bitmap, the amount of information increases correspondingly with an increase in the number of recording/reproducing unit blocks of the user data area.

### DETAILED DESCRIPTION OF THE INVENTION

### TECHNICAL PROBLEM

Thus, in response to the recording/reproducing unit block of the user data area not being represented in a predetermined space bitmap due to the increase in the number of recording/reproducing unit blocks of the user data area in a high capacity of a medium, a method of effectively representing the recording status of the recording/ reproducing unit block is beneficial.

### TECHNICAL SOLUTION

The present invention provides a medium, an apparatus, and a method of recording information about an additional space bitmap assigned if a recording/reproducing unit block of a user data area cannot be indicated in a predetermined space map, on a space bitmap.

### ADVANTAGEOUS EFFECTS

According to the present invention, a recording status of a recording/ reproducing unit block can be indicated by efficiently assigning an ASBM if all of the recording/reproducing unit blocks of a user data area cannot be indicated by a predetermined SBM due to the increase in the number of recording/reproducing unit blocks of the user data area according to high capacity of a media.

### BRIEF DESCRIPTION OF THE DRAWINGS

FIG. 1 is a schematic illustrating an example of a layout of a disc;

FIG. 2 is a diagram illustrating an example of temporary disc management information (TDMI) recorded in a temporary disc management area (TDMA) of FIG. 1;

FIG. 3 is a table illustrating an example of disc parameters according to a capacity per layer;

FIGS. 4A and 4B are diagrams illustrating examples of spare areas assigned to each layer respectively in information storage media of 3 and 4 layers;

FIG. 5 is a table illustrating an example of a space bitmap (SBM) format;

FIG. 6 is a diagram illustrating an example of an additional bitmap;

FIG. 7 is a diagram illustrating an example of a TDMA;

FIG. 8 is a diagram illustrating an example of TDMln recorded in an nth layer;

FIG. 9 is a diagram illustrating an example of a SBMn format;

FIG. 10 is a diagram illustrating an example of a TDDSn format;

FIG. 11 is a diagram illustrating an example of a recording and reproducing apparatus;

FIG. 12 is a diagram illustrating an example of a drive implementing the recording and reproducing apparatus of FIG. 11;

FIG. 13 is a flowchart illustrating an example of a recording method; and

FIG. 14 is a flowchart illustrating an example of a reproducing method.

Throughout the drawings and the detailed description, unless otherwise described, the same drawing reference numerals will be understood to refer to the same elements, features, and structures. The relative size and depiction of these elements may be exaggerated for clarity, illustration, and convenience.

### BEST MODE

According to an aspect, an information storage medium is provided. The information storage medium includes a user data area on which user data is recorded, and a temporary disc management area on which a space bitmap representing a recording status of at least one recording/reproducing unit block of the user data area is recorded. The space bitmap includes information relating to an additional space bitmap which is assigned in response to a space of the space bitmap being insufficient to represent the recording status of the at least one recording/reproducing unit block of the user data area.

The information relating to the additional space bitmap may include information indicating whether the additional space bitmap is assigned, location information of a space for the additional space bitmap, size information of the space for the additional space bitmap, location information of the at least one recording/reproducing unit block in the user data area, which is related to the additional space bitmap, number information relating to the number of at least one recording/reproducing unit block in the user data area, which is related to the additional space bitmap, or any combination thereof.

In another aspect, an apparatus for recording data on an information storage medium is provided. The apparatus includes a pickup configured to irradiate or receive light so as to transfer data with respect to the information storage medium including a user data area on which user data is recorded, and a temporary disc management area on which a space bitmap representing a recording status of at least one recording/reproducing unit block of the user data area is recorded, and a controller configured to control the pickup to record information relating to an additional space bitmap which is assigned if a space of the space bitmap is insufficient to represent the recording status of the at least one recording/reproducing unit block of the user data area, on the space bitmap.

In another aspect, an apparatus for reproducing data from an information storage medium is provided. The apparatus includes a pickup configured to irradiate or receive light so as to transfer data with respect to the information storage medium including a user data area on which user data is recorded, and a temporary disc management area on which a space bitmap representing a recording status of at least one recording/reproducing unit block of the user data area is recorded, and a controller configured to control the pickup to read information relating to an additional space bitmap which is assigned in response to a space of the space bitmap being insufficient to represent the recording status of the at least one recording/reproducing unit block of the user data area, from the space bitmap.

In another aspect, a method of recording data on an information storage medium including a user data area on which user data is recorded, and a temporary disc management area on which a space bitmap representing a recording status of at least one recording/reproducing unit block of the user data area is recorded is provided. The method includes recording information relating to an additional space bitmap which is assigned in response to a space of the space bitmap being insufficient to represent the recording status of the at least one recording/reproducing unit block of the user data area, on the space bitmap.

In another aspect, a method of reproducing data from an information storage medium including a user data area on which user data is recorded, and a temporary disc management area on which a space bitmap representing a recording status of at least one recording/reproducing unit block of the user data area is recorded is provided. The method includes reproducing information relating to an additional space bitmap which is assigned in response to a space of the space bitmap being insufficient to represent the recording status of the at least one recording/reproducing unit block of the user data area, from the space bitmap.

### DETAILED DESCRIPTION

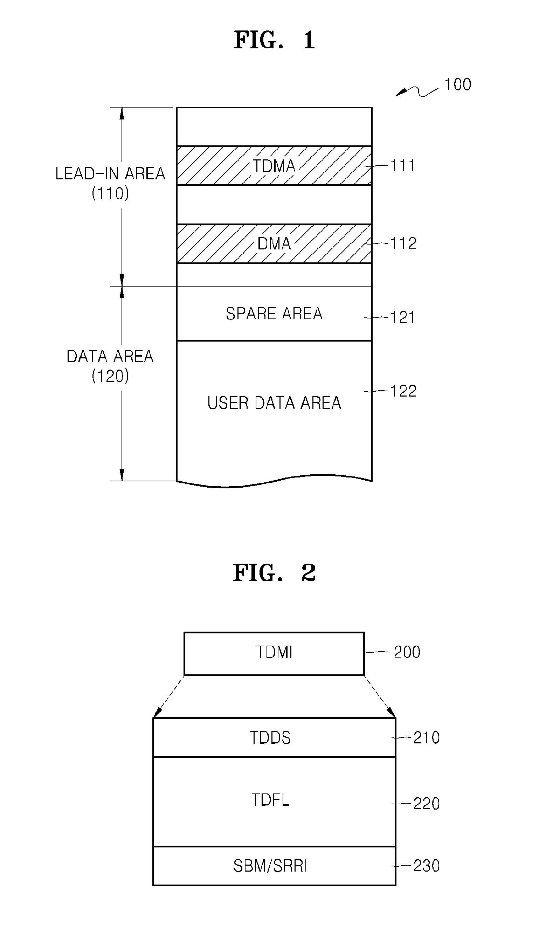

FIG. 1 illustrates an example of a layout of a disc 100.

Referring to FIG. 1, the disc 100 may include a lead-in area 110 and a data area 120.

The lead-in area 110 may include a temporary disc management area (TDMA) 111 and a disc management area (DMA) 112.

The TDMA 111 may relate to an area for recording disc management information while using an information storage medium according to a defect or a logical overwrite, or according to recording management information based on a recording method.

The DMA 112 may relate to an area for storing final disc management information recorded on the TDMA 111. The information of the TDMA 111 may be transferred and stored in the DMA 112 during finalization of a disc.

The data area 120 may include a spare area 121 and a user data area 122.

The user data area 122 may relate to an area for recording user data in a recording/reproducing unit block.

The spare area 121 may relate to an area for recording a replacement block for replacing a defective block in response to the defective block being detected in the user data area 122. In another example, the spare area 121 may relate to an area for recording a replacement block for updating a data block of the user data area 122 according to a logical overwrite.

As another aspect, Fig. 1 is a non-limiting example, and the layout of the disc 100 may include various layouts. In another example, the lead-in area 110 may further include other areas for recording disc information, the data area 120 may further include a spare area, or the disc 100 may include more than one recording layer.

FIG. 2 illustrates an example of temporary disc management information (TDMI) 200 recorded in the TDMA 111 of FIG. 1.

Referring to FIG. 2, the TDMI 200 may include a temporary disc definition structure (TDDS) 210, a temporary defect list (TDFL) 220, and space bitmap/sequential recording range information (SBM/SRRI) 230.

The TDFL 220 may include information relating to an original block and a replacement block in response to the original block being replaced by the replacement block due to a defect or logical overwrite in the user data area 122. The TDFL 220 may include at least one defect list entry. Each defect list entry may include, for example, location information of a defective block and location information of a replacement block.

The TDDS 210 may include information for managing a disc or for managing the TDFL 220. For example, the TDDS 210 may include location information of the TDFL 220.

The SBM/SRRI 230 may include recording management information for representing the recording status of the user data area 122. In response to a recording method being a random recording, SBM information representing the recording status of each recording/reproducing unit block of the user data area 122 in bits is recorded, and in response to the recording method being a sequential recording, SRRI is recorded.

As another aspect, the structure of the TDMI 200 of FIG. 2 is a non-limiting example, and thus the structure of the TDMI 200 of FIG. 2 may vary. Accordingly, the TDMI 200 may include TDDS, TDFL, and SBM, or the TDMI 200 may include TDDS and SBM while TDFL may be separately recorded from the TDDS and the SBM.

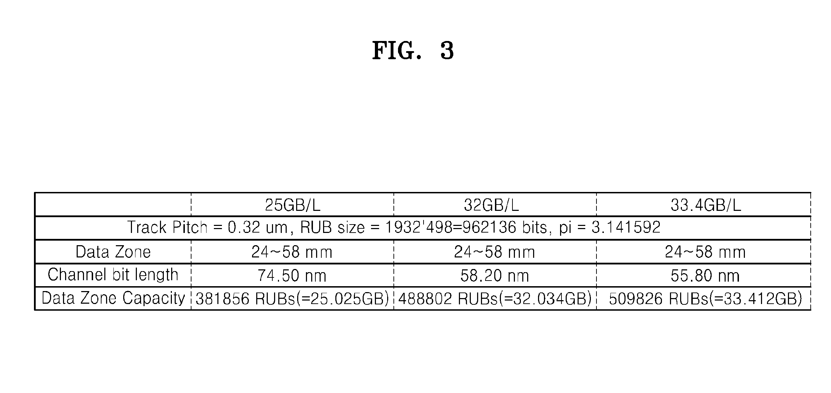

FIG. 3 illustrates an example of a table showing disc parameters according to a capacity per layer.

Referring to FIG. 3, a data zone capacity of a disc having 25 GB per layer corresponds with 381856 RUB, data zone capacity of a disc having 32 GB per layer corresponds with 488802 RUB, and data zone capacity of a disc having 33.4 GB per layer corresponds with 509826 RUB. In this example, RUB refers to a recording unit block. Generally, since a recording unit block for recording data on a disc also corresponds with a reproducing unit block, the recording unit block may also be referred to as a recording/reproducing unit block.

Later described examples may include the following conditions.

For example a size of user data recorded on a recording/reproducing unit block may be 64 KB (= 32 sectors).

TDMI may include a TDDS of 1 sector, a TDFL of 32 x layer numbers of disc - 1 sectors, and SBM/SRRI of 31 sectors.

SBMs include an SBM corresponding to each layer. In other words, in response to the disc having 3 layers, the SBMs include SBM0, SBM1, and SBM2, and each of the SBM0 through SBM2 may be recorded with a TDDS.

In a random recording mode, a TDDS and an SBM may be recorded together in a TDMA, and the TDDS and the SBM may be recorded as one recording/reproducing unit block by setting the TDDS and the SBM to have the sizes of 1 sector and 31 sectors, respectively.

Since the SBM has 64 bytes allocated for header information, bitmap data may represent remaining information. In this example, a number of representable recording/reproducing unit blocks may be 8 (bits) x (31 (sectors) x 2048 (2 kilobytes (KB)) - 64 (bytes)) = 507392. In other words, in response to 1 sector being 2 KB, the 31 sectors constituting the capacity of the SBM may be 31 x 2048 (=2 KB) bytes, and in response to 64 bytes constituting the capacity of the header information being subtracted from the capacity of the SBM, the result corresponds with (31 x 2048 - 64) bytes. Since one bit represents recording of one recording/reproducing unit block in the SBM and 8 x (31 x 2048 - 64) bits represent recording statuses of recording/reproducing unit blocks, 8 x (31 x 2048 - 64) recording/reproducing unit blocks may be represented by one SBM.

Accordingly, as shown in the disc parameters of FIG. 3, in response to the disc having 33.4 GB/L, an entire data zone may not be capable of being fully represented in a bitmap (data zone = user data area if a spare area is not assigned to a data zone).

Accordingly, in response to recording/reproducing unit blocks of a user data area not being all represented in a predetermined SBM, a spare area of at least 2434 = 509826 - 507392 blocks is assigned to each layer so that all the recording/reproducing unit blocks of each layer may be represented in one SBM. As such, the size of the SBM corresponding to each layer may be set to 31 sectors, and the SBM may be recorded with the TDDS as one block.

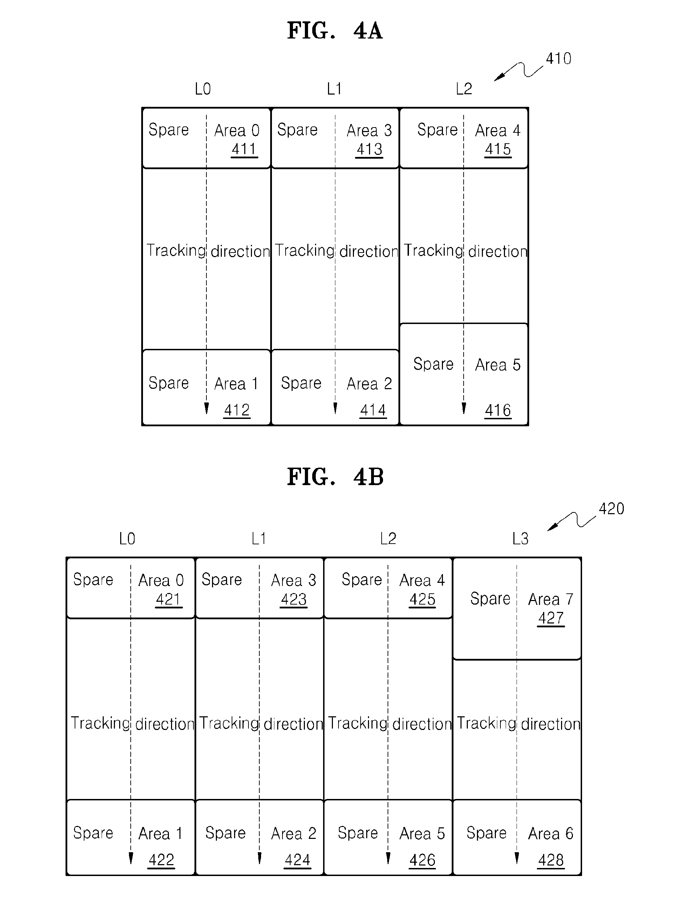

FIGS. 4A and 4B illustrate examples of spare areas assigned to each layer respectively in information storage media 410 and 420 of 3 and 4 layers as described above. In this example, SAn_size + SAn + 1_size ≥ 2434. Since a spare area is assigned according to the above method, an equation such as 4096 ≤ SAn_size + SAn + 1_size (n=0,2,4,6) may be satisfied.

In another example, in a sequential recording mode, a spare area being assigned may be optional. In other words, a size of a spare area may be 0 in a sequential recording mode.

In a random recording mode, a spare area may be assigned. In other words, at least one spare area whose size is not 0 may be assigned to a disc, and a spare area assigned to each layer has a predetermined size. For example, the predetermined size may be 4096 bits or greater. In this example, the predetermined size refers to a number of residual blocks in a user data area, which cannot be represented by a size of a given SBM format.

In another example, a spare area may be assigned to an inner perimeter of the disc, and the spare area may have a predetermined size. For example, the predetermined size may be 4096 bits or greater. In other words, a spare area 0 411, a spare area 3 413, and a spare area 4 415 may be assigned in the information storage medium 410 of FIG. 4A, and a spare area 0 421, a spare area 3 423, a spare area 4 425, and a spare area 7 427 may be assigned in the information storage medium 420 of FIG. 4B, where the sizes of the spare area 0 411, the spare area 3 413, the spare area 4 415, the spare area 0 421, the spare area 3 423, the spare area 4 425, and the spare area 7 427 may be set to a predetermined size. For example, the predetermined size may be 4096 bits or greater. Similarly, a spare area may be assigned to an outer perimeter of a disc, and a size of the spare area may be set to a predetermined size. For example, the predetermined size may be 4096 bits or greater.

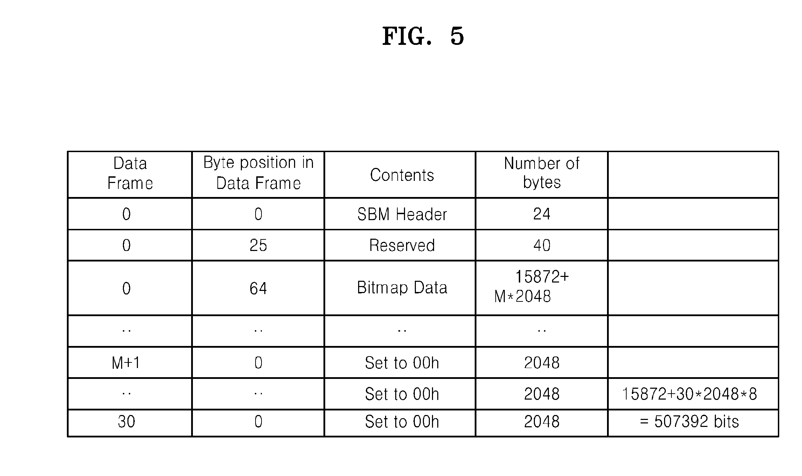

An example of a SBM format according to the above method is illustrated in FIG. 5.

Referring to FIG. 5, the SBM format includes an SBM header and bitmap data.

The following method may be used, in another example, in response to recording/reproducing unit blocks of a user data area not being represented in a predetermined SBM.

For example, as described above, in response to the recording/reproducing unit blocks of the user data area not being represented in an SBM of 31 sectors, for example, in response to a disc having a size of 33.4 GB per layer, the recording/reproducing unit blocks are represented by the SBM of 31 sectors, as much as possible, and a bitmap of remaining recording/reproducing unit blocks (509826 - 507392 = 2434, when expressed in bitmap data, 2434 bits = 304.25 bytes) may be stored and recorded in remaining disc management information, such as, for example, TDDS or TDFL. As another aspect, an additional bitmap is not limited to being stored and recorded in TDDS or TDFL, and may be recorded in any area of the disc.

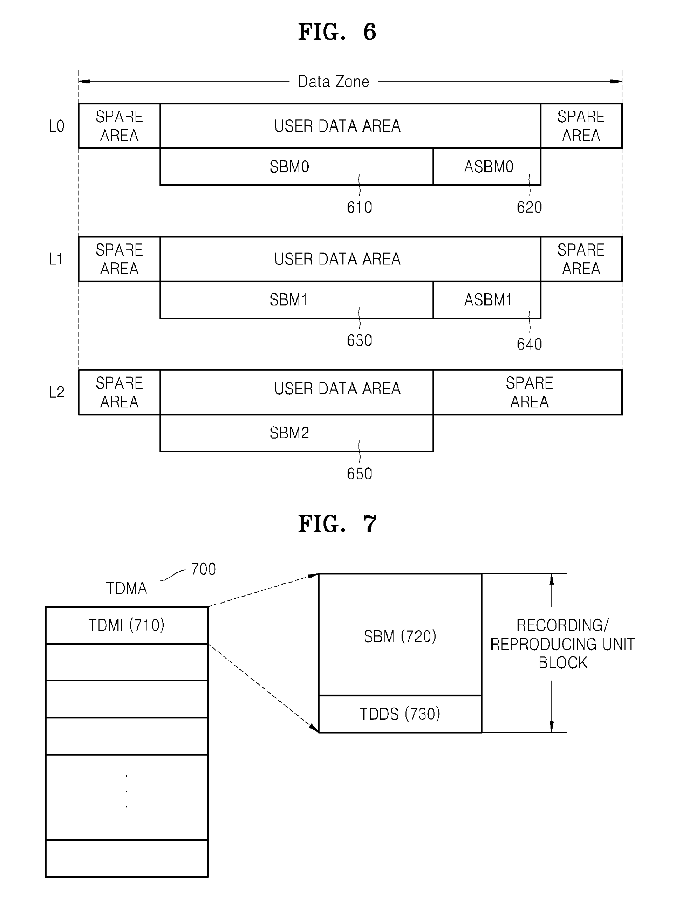

FIG. 6 illustrates an example of an additional bitmap.

Referring to FIG. 6, a disc may include a layer 0 (L0), a layer 1 (L1), and a layer 2 (L2), where a data area of each of the L0 through L2 may include two spare areas and one user data area.

A recording status of a recording/reproducing unit block of a part of the user data area of L0 may be represented by SMB0 610, and a remaining part of the user data area that may not be capable of being represented by the SBM0 610 may be represented by an additional SBM0 (ASBMO) 620.

Similarly, a recording status of a recording/reproducing unit block of a part of the user data area of L1 may be represented by SBM1 630, and a remaining part of the user data area that is not capable of being represented by the SBM1 630 may be represented by an ASBM1 640.

In L2, since a recording status of a recording/reproducing unit block of the entire user data area of L2 can be indicated by SBM2 650, an ASBM may not be included in L2.

Since a TDDS may include location information relating to where an SBM is recorded in each layer, the TDDS may be updated in response to the SBM being updated. Thus, updating the TDDS may not be difficult if additional bitmap data is stored in the TDDS.

FIG. 7 illustrates an example of a TDMA 700.

Referring to FIG. 7, in the TDMA 700, TDMI 710 may be recorded on one recording/reproducing unit block. The TDMI 710 may include an SBM 720 and a TDDS 730. In another example, the TDMI 710 may be recorded on two or more recording/reproducing unit blocks.

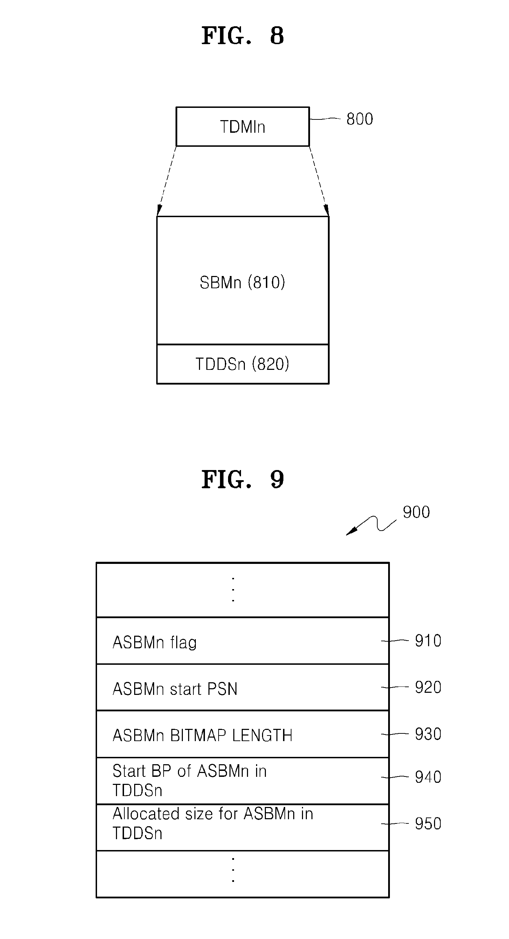

FIG. 8 illustrates TDMln 800 recorded in an nth layer.

Referring to FIG. 8, the TDMln 800 may include an SBMn 810 and a TDDSn 820.

Bitmap data of remaining user data blocks of the nth layer, which may not be capable of being represented by the SBMn 810 may be represented by the TDDSn 820.

Since the SBMn 810 and the TDDSn 820 may be recorded in the same block, remaining bitmap data may be obtained from the TDDSn 820 in the block including the SBMn 810 while accessing the SBMn 810 from a final TDDS later. Thus, the entire bitmap data relating to the nth layer may be obtained from the TDMln 800.

Based on how a spare area is assigned in a data area of a disc, for example, based on a size of the assigned spare area, all of user data area of an nth layer may be represented by an SBMn of 31 sectors. In another example, all of user data area of an nth layer may not be represented by the SBMn of 31 sectors. Here, an ASBM flag may be included in the SBMn to indicate that there is additional bitmap data since all of the user data area could not be represented by the SBMn. For example, the ASBM flag may be included in the same location as a header of the SBMn, and in response to a setting value of the ASBM flag being 0, an ASBMn may not exist since all of the user data area of the nth layer can be represented by the SBMn, and in response to the setting value of the ASBM flag being 1, bitmap data relating to a remaining user data area that could not be represented by the SBMn may be recorded on the ASBMn since the user data area of the nth layer is too large to be represented by the SBMn. In other words, in response to the SBMn and the TDDSn being recorded by forming one block, and the ASBM flag being recorded in the same location as the header of the SBMn to indicate existence of the ASBMn, the ASBM flag may be stored in the TDDSn.

For example, in a disc having 3 layers, in response to SBM0 through SBM2 being updated in a stated order since all of the SBM0 through SBM2 of the 3 layers need to be updated, blocks may be recorded in an order of SBM0+TDDS0, SBM1+TDDS1, and SBM2+TDDS2. In this example, pointers corresponding to locations where final SBM0 through SBM2 are recorded may be recorded on the TDDS2 of the last block, and the pointers corresponding to the SBM0 through SBM2 are obtained from the TDDS2. Here, ASBM may be required based on a size of a spare area assigned to each layer. In another example. The ASBM may not by required based on a size of a spare area assigned to each layer. A controller of a drive may determine whether an ASBM of each layer exists based on assignment information of a spare area stored in a TDDS. In another example, the controller may determine whether an ASBM of each layer exists from an SBM of the corresponding layer. In response to an ASBM existing, the controller obtains the ASBM from the TDDS recorded with the corresponding SBM. Thus, the controller may obtain the entire bitmap data of the corresponding layer. In response to an ASBM existing while the blocks are recorded in the order of SBM0+TDDS0, SBM1+TDDS1, and SBM2+TDDS2, the TDDS0 stores ASBM0, the TDDS1 stores ASBM1, and the TDDS2 stores ASBM2. Also, since a size of a spare area assigned to each layer may differ, a size of an existing ASBM may differ based on the corresponding layer. Accordingly, a starting location and an ending location, the starting location and bitmap length information, the bitmap length information and the ending location of the ASBM in the TDDS may be stored in the SBM, or a maximum size of an existing ASBM may be assigned to a fixed location in the TDDS.

Also, each SBMn includes starting address information of the user data area represented by bitmap data of the ASBMn, and length information of the bitmap data indicated in the ASBMn. In another example, the starting address information or the length information may be stored in the ASBMn. While finalizing a disk, SBMn+TDDSn is recorded on a DMA as SBMn+DDSn, and DDSn stores information relating to the ASBMn similar to the TDDSn.

FIG. 9 illustrates an example of a SBMn format 900.

Referring to FIG. 9, the SBMn format 900 includes an ASBMn flag 910, an ASBMn start PSN 920, an ASBMn bitmap length 930, a start BP of an ASBMn in a TDDSn 940, and an allocated size for the ASBMn in the TDDSn 950.

The ASBMn flag 910 indicates whether an ASBM is assigned.

The ASBMn start PSN 920 relates to physical starting addresses of user data areas indicated by bitmap data.

The ASBMn bitmap length 930 refers to a number of recording/reproducing unit blocks of a user data area represented by bitmap data of the ASBMn.

The start BP of ASBMn in TDDSn 940 indicates a byte position or bit position where the ASBMn starts in the TDDSn.

The allocated size for ASBMn in TDDSn 950 indicates number of bytes (bits) of the ASBMn assigned in the TDDSn.

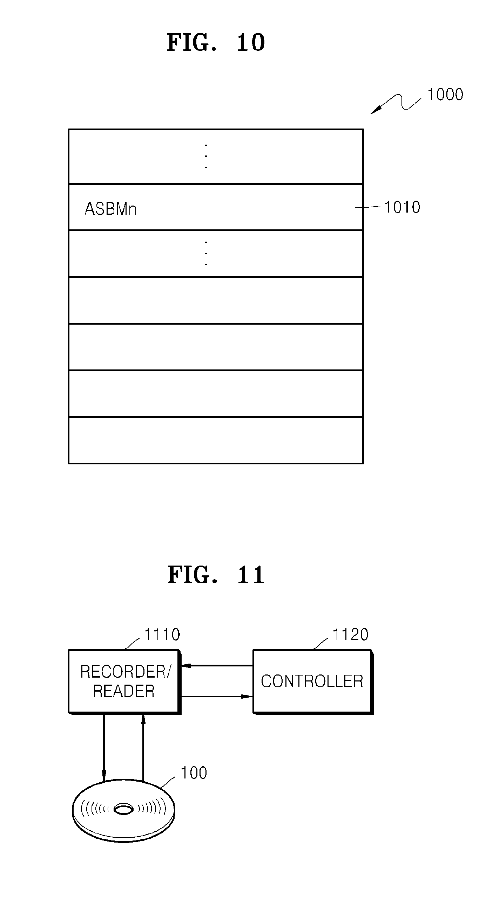

FIG. 10 illustrates an example of a TDDSn format 1000.

Referring to FIG. 10, the TDDSn format 1000 includes an ASBMn 1010. Referring to FIG. 10, the ASBMn 1010 is shown to be prepared in the TDDSn format 1000, but the ASBMn 1010 may be prepared in a TDDS, a TDFL, or another block, and stored in any location. An ASBM may be stored anywhere because as long as information relating to the ASBM is recorded on an SBM as described with reference to FIG. 9, existence of the ASBM may be determined wherever the ASBM is located, and thus the ASBM can be accessed.

A recording/reproducing apparatus and a recording/reproducing method will now be described with reference to FIGS. 11 through 14.

FIG. 11 illustrates an example of a recording and reproducing apparatus.

Referring to FIG. 11, the recording and reproducing apparatus may include a recorder/reader 1110 and a controller 1120.

The disc 100 may include a user data area on which user data is recorded, and a TDMA on which an SBM representing a recording status of a recording/reproducing unit block of the user data area is recorded.

The recorder/reader 1110 may record and read data on and from the disc 100 according to control of the controller 1120.

The controller 1120 may control the recorder/reader 1110 to record or read data on and from the disc 100. In another example, the controller 1120 may control the recorder/reader 1110 to record information relating to an ASBM which is assigned in response to a space of the SBM being insufficient to represent the recording status of the recording/reproducing unit block of the user data area, on the SBM.

Also, the controller 1120 may control the recorder/reader 1110 to read the information relating to the ASBM which is assigned in response to the space of the SBM being insufficient to represent the recording status of the recording/reproducing unit block of the user data area, from the SBM.

In this example, the recorder/reader 1110 may be implemented as one system as shown in FIG. 11. In another example, the recorder/reader 1110 may be individually implemented as a separate recorder and a separate reader.

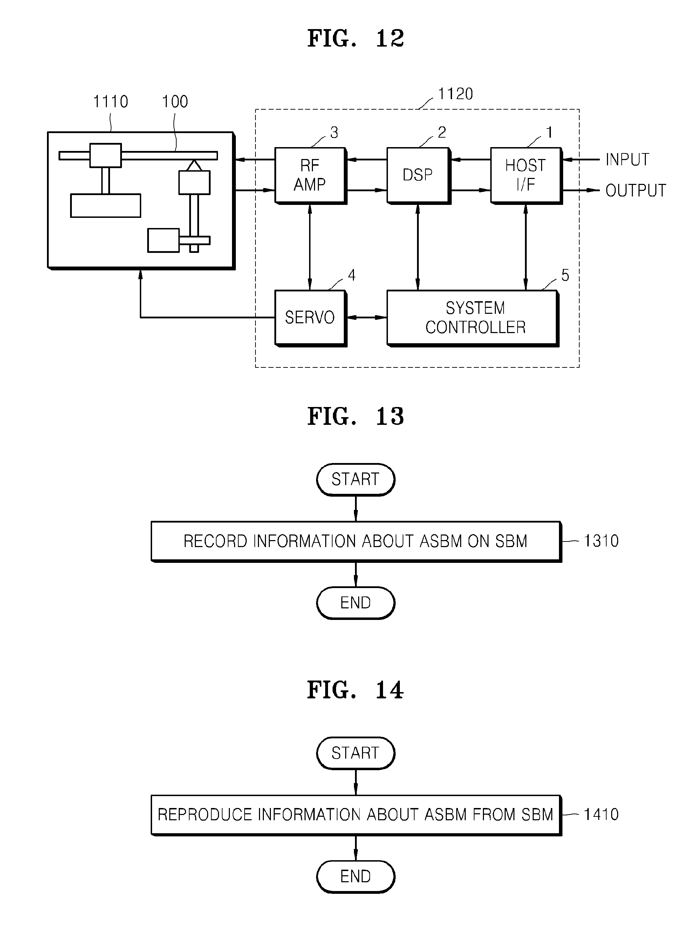

FIG. 12 illustrates an example of a drive implementing the recording and reproducing apparatus of FIG. 11.

Referring to FIG. 12, the drive may include a pickup as the recorder/reader 1110, and the pickup is installed to the disc 100. Also, the drive may include a host interface (I/F) 1, a digital signal processor (DSP) 2, a radio frequency amplifier (RF AMP) 3, a servo 4, and a system controller 5. During recording, the host I/F 1 may receive a recording command with data to be recorded from a host (not shown).

The system controller 5 performs initiation required for recording. The DSP 2 may perform an error correcting code (ECC) encoding by adding additional data, such as parity, to the data received from the host I/F 1 for error correction, and may modulate the ECC encoded data according to a predetermined method. The RF AMP 3 may change data output from the DSP 2 to an RF signal. The pickup may record the RF signal output from the RF AMP 3 on the disc 100. The servo 4 may servo-control the pickup by receiving a command required to control the servo 4 from the system controller 5.

In another example, the system controller 5 may control the pickup to record information relating to an ASBM which is assigned in response to a space of an SBM being insufficient to represent a recording status of a recording/reproducing unit block of a user data area, on the SBM (operation 1310 of FIG. 13).

During reproduction, the host I/F 1 may receive a reproducing command from the host. The system controller 5 may perform initiation required for the reproduction. The pickup irradiates a laser beam to the disc 100, and outputs an optical signal obtained by receiving the laser beam reflected from the disc 100. The RF AMP 3 converts the optical signal output from the pickup 100 to an RF signal, and provides modulated data obtained from the RF signal to the DSP 2 while providing a servo signal for control obtained from the RF signal to the servo 4. The DSP 2 outputs data obtained by demodulating the modulated data and performing ECC error correction on the demodulated data. Meanwhile, the servo 4 servo-controls the pickup by receiving the servo signal from the RF AMP 3 and a command required for servo-control from the system controller 5. The host I/F 1 transmits the data received from the DSP 2 to the host.

In another example, the system controller 5 may control the pickup to reproduce the information relating to the ASBM which is assigned in response to the space of the SBM being insufficient to indicate the recording status of the recording/reproducing unit block of the user data, from the SBM (operation 1410 of FIG. 14).

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy discs, optical data storage devices, etc. The computer readable recording medium can also be distributed over network coupled computer systems so that the computer readable code is stored and executed in a distributed fashion. Also, functional programs, codes, and code segments for accomplishing the present invention can be easily construed by programmers of ordinary skill in the art to which the present invention pertains.

While this invention has been particularly shown and described with reference to embodiments thereof, it will be understood by those of ordinary skill in the art that various changes in form and details may be made therein without departing from the spirit and scope of the invention as defined by the appended claims. The embodiments should be considered in a descriptive sense only and not for purposes of limitation. Therefore, the scope of the invention is defined not by the detailed description of the invention but by the appended claims, and all differences within the scope will be construed as being included in the present invention.

## Claims

1. An information storage medium comprising:
a user data area on which user data is recorded; and
a temporary disc management area on which a space bitmap representing a recording status of at least one recording/reproducing unit block of the user data area is recorded,
wherein the space bitmap comprises information relating to an additional space bitmap which is assigned in response to a space of the space bitmap being insufficient to represent the recording status of the at least one recording/reproducing unit block of the user data area.

2. The information storage medium of claim 1, wherein the information relating to the additional space bitmap comprises information indicating whether the additional space bitmap is assigned, location information of a space for the additional space bitmap, size information of the space for the additional space bitmap, location information of the at least one recording/reproducing unit block in the user data area, which is related to the additional space bitmap, number information relating to the number of at least one recording/reproducing unit block in the user data area, which is related to the additional space bitmap, or any combination thereof.

3. An apparatus for recording data on an information storage medium, the apparatus comprising:
a pickup configured to irradiate or receive light so as to transfer data with respect to the information storage medium comprising a user data area on which user data is recorded, and a temporary disc management area on which a space bitmap representing a recording status of at least one recording/reproducing unit block of the user data area is recorded; and
a controller configured to control the pickup to record information relating to an additional space bitmap which is assigned if a space of the space bitmap is insufficient to represent the recording status of the at least one recording/reproducing unit block of the user data area, on the space bitmap.

4. The apparatus of claim 3, wherein the information relating to the additional space bitmap comprises information indicating whether the additional space bitmap is assigned, location information of a space for the additional space bitmap, size information of the space for the additional space bitmap, location information of the at least one recording/reproducing unit block in the user data area, which is indicated by the additional space bitmap, number information of the at least one recording/reproducing unit block in the user data area, which is indicated by the additional space bitmap, or any combination thereof.

5. An apparatus for reproducing data from an information storage medium, the apparatus comprising:
a pickup configured to irradiate or receive light so as to transfer data with respect to the information storage medium comprising a user data area on which user data is recorded, and a temporary disc management area on which a space bitmap representing a recording status of at least one recording/reproducing unit block of the user data area is recorded; and
a controller configured to control the pickup to read information relating to an additional space bitmap which is assigned in response to a space of the space bitmap being insufficient to represent the recording status of the at least one recording/reproducing unit block of the user data area, from the space bitmap.

6. The apparatus of claim 5, wherein the information relating to the additional space bitmap comprises information indicating whether the additional space bitmap is assigned, location information of a space for the additional space bitmap, size information of the space for the additional space bitmap, location information of the at least one recording/reproducing unit block in the user data area, which is indicated by the additional space bitmap, number information indicating the number of at least one recording/reproducing unit block in the user data area, which is indicated by the additional space bitmap, or any combination thereof.

7. A method of recording data on an information storage medium comprising a user data area on which user data is recorded, and a temporary disc management area on which a space bitmap representing a recording status of at least one recording/reproducing unit block of the user data area is recorded, the method comprising:
recording information relating to an additional space bitmap which is assigned in response to a space of the space bitmap being insufficient to represent the recording status of the at least one recording/reproducing unit block of the user data area, on the space bitmap.

8. The method of claim 7, wherein the information relating to the additional space bitmap comprises information indicating whether the additional space bitmap is assigned, location information of a space for the additional space bitmap, size information of the space for the additional space bitmap, location information of the at least one recording/reproducing unit block in the user data area, which is indicated by the additional space bitmap, number information indicating the number of at least one recording/reproducing unit block in the user data area, which is indicated by the additional space bitmap, or any combination thereof.

9. A method of reproducing data from an information storage medium comprising a user data area on which user data is recorded, and a temporary disc management area on which a space bitmap representing a recording status of at least one recording/reproducing unit block of the user data area is recorded, the method comprising:
reproducing information relating to an additional space bitmap which is assigned in response to a space of the space bitmap being insufficient to represent the recording status of the at least one recording/reproducing unit block of the user data area, from the space bitmap.

10. The method of claim 9, wherein the information relating to the additional space bitmap comprises information indicating whether the additional space bitmap is assigned, location information of a space for the additional space bitmap, size information of the space for the additional space bitmap, location information of the at least one recording/reproducing unit block in the user data area, which is indicated by the additional space bitmap, number information of the at least one recording/reproducing unit block in the user data area, which is indicated by the additional space bitmap, or any combination thereof.
